Europäisches Patentamt

European Patent Office

Office européen des brevets

(19)

(11) EP 1 236 495 A1

(12) **EUROPEAN PATENT APPLICATION**

(43) Date of publication:
**04.09.2002 Bulletin 2002/36**

(21) Application number: **01200799.3**

(22) Date of filing: **02.03.2001**

(51) Int Cl.⁷: **B01D 53/04**, C01B 3/38,
H01M 8/06, C10G 25/05,
C10G 25/00

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **ENGELHARD CORPORATION
Iselin, New Jersey 08830-0770 (US)**

(72) Inventors:
• **Terörde, Robert Johan Andreas Maria
3522 DJ Utrecht (NL)**
• **Vaarkamp, Marius
Houston, Texas 77429 (US)**

(74) Representative: **Prins, Adrianus Willem et al
Vereenigde,
Nieuwe Parklaan 97
2587 BN Den Haag (NL)**

(54) **Process and apparatus for removing sulfur compounds from a hydrocarbon stream**

(57) The invention is directed to a process for removal of sulfur compounds from a hydrocarbon source containing them, wherein the hydrocarbon source is to be utilized in a downstream hydrogen production process including a sulfur removal step, said process for removal of sulfur compounds comprising passing the said hydrocarbon source through a low temperature sulfur trap, wherein the low temperature sulfur trap comprises an adsorbent that adsorbs sulfur compounds at low temperature, and releases adsorbed sulfur at elevated temperature.

EP 1 236 495 A1

Printed by Jouve, 75001 PARIS (FR)

**Description**

BACKGROUND OF THE INVENTION

The present invention is concerned with the purification of hydrocarbons to be used in the production of hydrogen, especially suitable for use in the production of electric power from a hydrogen fueled fuel cell supplied with hydrogen by a reforming process.

As is well known in the art, fuel cells generate electric current by the reaction of a fuel and oxidant brought into contact with a suitable electrolyte. Current is generated by a catalyzed chemical reaction on electrode surfaces, which are maintained in contact with the electrolyte. Air or air with a circulating coolant may be used for heat and water removal from the cell.

Known types of fuel cells include bipolar cells, which utilize hydrogen as the fuel and the oxygen in air as the oxidant. Fuel cells may comprise various cell constructions and various electrolytes such as aqueous potassium hydroxide, fused alkali carbonate, solid polymer electrolytes, etc. Various electrode catalysts, such as nickel, silver, platinum, ruthenium, palladium, base metal oxides and tungsten carbide are known as electrode catalysts. Although other fuels such as hydrazine are known, hydrogen is the most commonly utilized fuel for fuel cells and reacts therein with oxygen introduced to the cell to yield water as a reaction product.

Fuel cells offer the possibility of significant advantages over other electrical power sources including improved efficiency, low operating costs, modular construction, which enables "tailor-made" sizing and siting of the units, and protection of the environment in view of the lack of significant noxious exhaust. A significant factor is the availability of a reliable and suitable source of hydrogen fuel. Hydrogen may be prepared from hydrocarbons by the (catalytic) partial oxidation of heavier hydrocarbons, such as fuel oil and coal, and by steam reforming of lighter hydrocarbons such as natural gas and naphtha's. Processes to derive hydrogen from methanol or coal-derived hydrocarbons are also known. Generally, difficulties associated with the preparation of hydrogen from heavier feedstocks favor the use of light naphtha's or natural gas as the hydrocarbon source.

Steam reforming is a well known method for generating hydrogen from light hydrocarbon feeds and is carried out by supplying heat to a mixture of steam and a hydrocarbon feed while contacting the mixture with a suitable catalyst, usually nickel. However, steam reforming is generally limited to paraffinic naphtha and lighter feeds which have been de-sulfurized and treated to remove nitrogen compounds, because of difficulties in attempting to steam reform heavier hydrocarbons and the poisoning of steam reforming catalysts by sulfur and nitrogen compounds.

Another known method of obtaining hydrogen from a hydrocarbon feed is the partial oxidation process in which the feed is introduced into an oxidation zone maintained in a fuel rich mode so that only a portion of the feed is oxidized. Steam may be injected into the partial oxidation reactor vessel to react with the feed and with products of the partial oxidation reaction. The process requires high temperatures. The partial oxidation process has the advantage that it is able to readily handle hydrocarbon liquids heavier than paraffinic naphtha's and can even utilize coal as the source of the hydrocarbon feed.

Catalytic autothermal reforming of hydrocarbon liquids is also known in the art. Autothermal reforming is defined therein as the utilization of catalytic partial oxidation in the presence of added steam, which is said to increase the hydrogen yield because of simultaneous (with the catalytic partial oxidation) steam reforming being attained. Steam, air and a hydrocarbon fuel are injected through precious metal and/or nickel catalysts in particulate or monolithic form. The resulting product gases contained hydrogen and carbon oxides.

Conventional feedstocks to be used in fuel cells, such as natural gas and fuel oil, contain varying amounts of sulfur compounds, which are detrimental to the catalysts used in the fuel cell systems, i.e. to the fuel cell electrodes or even to the preceding hydrogen production steps. Furthermore, the sulfur compounds are often corrosive, are converted in corrosive compounds. Finally, it is to be noted that emission of sulfur compounds into the atmosphere is generally not allowed. Accordingly, it is a requirement to remove sulfur compounds at some stage.

Natural gas contains amounts of odorants, such as THT or mercaptans. Fuel oils contain various sulfur compounds, the amount and nature thereof depending on the origin and treatment of the fuel oil.

Methods for removing organo sulfur compounds from hydrocarbons are well-known in the art. Generally the hydrocarbons are first subjected to a catalytic hydro-desulfurization step, in which the organo sulfur compounds are converted to hydrogen sulfide and hydrocarbons. The hydrogen sulfide is subsequently removed by adsorption on a suitable adsorbent, optionally after removal of gaseous hydrogen sulfide (in case the amount thereof is very high). Suitable adsorbents are metal oxides, such as zinc oxide or iron oxide. It is also possible to use alternative adsorbents for sulfur compounds, such as zeolites or nickel.

In hydrocarbon fuel processing for producing hydrogen, such as for industrial use or for generating electricity in fuel cells, generally a sulfur removal step is included based on conventional sulfur removal systems, such as those mentioned before.

One possibility would be to use an adsorbent based on nickel. These nickel adsorbent-based systems only operate above a certain minimal temperature, which means that in the start-up phase of the system the sulfur is not removed, unless the adsorbent is heated first to the operating temperature. During steady-state operation, this heating is conventionally done by using excess heat from the reformer.

In the start-up phase of the system, this excess heat is not available, which means that separate preheating means are required. This adds to the complexity of the system. This problem is especially large in case of fuel cells of relatively small size, that are operated intermittently, and not continuously over long periods. More in particular this is important in the newer developed fuel cells intended for household use. These cells tend to be switched on and off, depending on the heat and electricity requirements.

Some reforming systems are relatively insensitive to sulfur impurities in the feed. An example thereof is the autothermal reforming. In an autothermal reforming unit, these contaminants are converted to hydrogen sulfide, which is removed from the product stream of the reforming by adsorption on a suitable adsorbent, such as zinc oxide. However, during start-up, when the catalyst of the autothermal reformer is still cold (i.e. at temperatures below $700°C$), sulfur contaminants do poison the catalyst, which means that during start up a separate sulfur capture has to be available.

In such a case also a nickel adsorbent could be used during start up only, which could be switched off after the catalyst has reached its operating temperature. Then the same disadvantage of separate heating means applies here too.

Another consideration in the determination of the type of sulfur adsorbent to be used is that the system should preferably be operated for a long time without having to remove the materials for replacement or external regeneration.

In the first place there is a need for the provision of a sulfur adsorbent system, that operates at low temperature and can easily be regenerated during steady state operation.

Further, there is also a need for a sulfur removal system that efficiently operates both at low temperatures and at the higher temperatures available once the system is running in a steady state.

More in particular there is a need for a system, wherein the part operating at low temperature is regenerated automatically during high temperature operation.

SUMMARY OF THE INVENTION

In the broadest sense the present invention is directed to a process for removal of sulfur compounds from a hydrocarbon source containing them, wherein the hydrocarbon source is to be utilized in a downstream hydrogen production process including a sulfur removal step, said process for removal of sulfur compounds comprising passing the said hydrocarbon source through a low temperature sulfur trap, wherein the low temperature sulfur trap comprises an adsorbent that adsorbs sulfur compounds at low temperature during a cold start-up of the system, and releases adsorbed sulfur at elevated temperature.

According to a first, specific embodiment the present invention is directed to a process for the removal of sulfur compounds from a hydrocarbon source containing them. According to a second embodiment the present invention is directed to a process for the production of hydrogen (such as for producing ammonia, alcohols, ultra-clean hydrogen for electrical industry, for use in fuel cells and the like) from a hydrocarbon source, including the above step of sulfur removal. In a third embodiment the present invention is directed to a process for the production of electricity in a fuel cell, using the hydrogen produced in the above production process.

The present invention is based on the discovery that it is possible to operate a process for the sulfur removal in a simple and easy manner, without risk of sulfur compounds reaching the catalytic reactors, and without needing a separately heated nickel adsorbent in the start-up phase. The invention is based thereon, that during the start-up phase, when the downstream system is still relatively cold and does not operate properly yet, the adsorption is done by an upstream adsorbent that operates at low temperature and is automatically regenerated once the operating temperature has been reached. The regeneration occurs by desorption of the sulfur compounds back into the hydrocarbon feed, after which the sulfur compounds are adsorbed again into the nickel. In this way a very elegant and easy system is obtained, due to the automatic adsorption-desorption cycles, there is no need to replace the low-temperature adsorbent of this sulfur trap.

In the case of the use of a downstream nickel adsorbent, only after the nickel has been fully loaded with sulfur, after one or more years, dependent on the amount of adsorbent and the sulfur content of the feed, the nickel has to be replaced/regenerated. Even then there is no need to replace the other ,high temperature, adsorbent, although this might be useful, especially in case both materials are contained in the same container.

Accordingly in one embodiment the process of the present invention comprises removal of sulfur compounds from a hydrocarbon source containing them, wherein the hydrocarbon source is to be utilized in a downstream process operating at elevated temperature, said process comprising passing the said hydrocarbon source consecutively through a low temperature sulfur trap, and a nickel containing high temperature sulfur trap, wherein the low temperature sulfur trap comprises an adsorbent that adsorbs sulfur compounds at low temperature, and releases adsorbed sulfur at elevated temperature, i.e. above that required for the nickel adsorbent to adsorb sulfur compounds, approximately above 80°C.

In a further embodiment the present invention comprises producing hydrogen (especially for industrial hydrogen production) from a hydrocarbon source containing sulfur compounds, said process comprising removing the said sulfur compounds from the said hydrocarbon source by passing the said hydrocarbon source consecutively through a low temperature sulfur trap, and a nickel containing high temperature sulfur trap, and converting the substantially sulfur free hydrocarbon source to hydrogen, wherein the low temperature sulfur trap comprises an adsorbent that adsorbs sulfur compounds at low temperature, and releases adsorbed sulfur at elevated temperature.

According to yet another embodiment the present invention comprises generating electricity from fuel cell means, the fuel cell means comprising a stack of anodes and cathodes and having an anode side and a cathode side, each side dimensioned and configured for the passage of respective gas streams therethrough, the fuel cell means being fueled by a hydrogen-rich gas derived by converting a hydrocarbon source in a reformer, removing sulfur from the hydrocarbon source at elevated temperature by adsorption of the sulfur compounds in a sulfur trap, the improvement comprising passing the said hydrocarbon source consecutively through a low temperature sulfur trap, and a nickel containing high temperature sulfur trap, wherein the low temperature sulfur trap comprises an adsorbent that adsorbs sulfur compounds at low temperature, and releases adsorbed sulfur at elevated temperature.

As has been indicated above, the situation is slightly different in case the hydrogen producing system is based on a reforming process, which system may be insensitive to sulfur poisoning, after the regular operating temperature has been reached (i.e. temperatures above 700°C). In that case the presence of the nickel adsorbent is not required. However, a further adsorbent is then present downstream from the reformer, to remove hydrogen sulfide from the hydrogen rich gas. Usually a conventional metal oxide adsorbent is used, such as zinc oxide.

In this respect one may contemplate reforming systems based on other catalysts than nickel, such as precious metal based systems. Examples can be autothermal reforming systems using precious metal catalysts or other reforming systems using precious metal catalysts.

Accordingly the invention is also directed to a process for removal of sulfur compounds from a hydrocarbon source containing them, wherein the hydrocarbon source is to be utilized in a downstream reforming process, which is sulfur insensitive at operating temperature, said process for removal of sulfur compounds comprising passing the said hydrocarbon source through a low temperature sulfur trap, wherein the low temperature sulfur trap comprises an adsorbent that adsorbs sulfur compounds at low temperature, and releases adsorbed sulfur at elevated temperature.

In still a further aspect this invention is directed to a process for generating electricity from fuel cell means, the fuel cell means comprising a stack of anodes and cathodes and having an anode side and a cathode side, each side dimensioned and configured for the passage of respective gas streams therethrough, the fuel cell means being fueled by a hydrogen-rich gas derived by converting a hydrocarbon source in an high-temperature sulfur insensitive reformer, removing sulfur from the hydrocarbon source at elevated temperature by adsorption of the sulfur compounds in a sulfur trap, the improvement comprising passing the said hydrocarbon source through a low temperature sulfur trap upstream of the reformer, wherein the low temperature sulfur trap comprises an adsorbent that adsorbs sulfur compounds at low temperature, and releases adsorbed sulfur at elevated temperature.

The invention is also directed to fuel cell systems based on the application of the various embodiments described above, using the equipment necessary to apply these processes.

BRIEF DESCRIPTION OF THE DRAWINGS

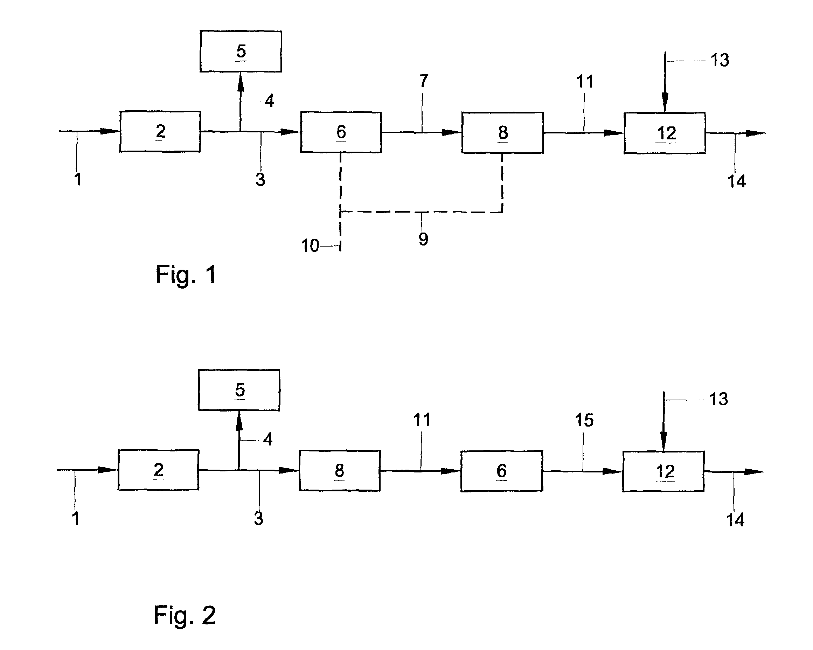

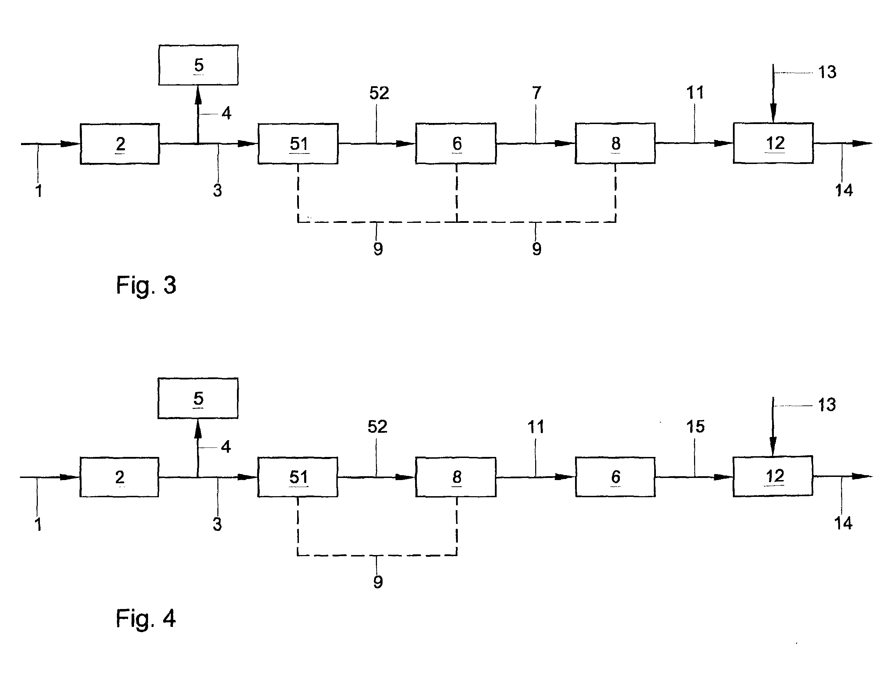

FIG. 1 and 2 are flow sheet diagrams of a fuel cell power plant in accordance with the prior art, including a reforming step for production of a hydrogen-rich gas and FIG 3 and 4 are flow sheet diagrams of a fuel cell power plant in accordance with the invention.

DESCRIPTION OF THE PREFERRED EMBODIMENTS

In a preferred embodiment of the present invention, the separate low temperature sulfur trap adsorbs sulfur compounds at a temperature below 75°C, more in particular between -20 and 75°C, whereas the desorption of sulfur compounds occurs at temperatures above 80°C. The adsorption on the nickel adsorbent, if present, starts to occur at a temperature above 65°C.

The adsorbent in the said separate sulfur trap is preferably a material selected from the group of zeolites, clay materials, carbon, alumina, silica and silica-alumina. More preferred is an acidic material, as the use of acidic materials improves the adsorption and desorption characteristics. Also preferred is the use of microporous materials, i.e. those having pores in the range below 5 nm. More in particular preference is given to a zeolite, such as Zeolite HY or HX, or clay materials.

When the system is started, the adsorbents are still cold. Initially the sulfur compounds are adsorbed by the low temperature sulfur adsorbent, thereby protecting the downstream system. During the start-up phase the downstream system heats up.

Once the downstream system (adsorbent, reformer) has reached its operating temperature, the low temperature adsorbent is no longer required and can also be gradually heated, for example by heating with excess heat from the downstream reformer, to regenerate the adsorbent.

Once the nickel adsorbent, if present, reaches its operating temperature, it starts to adsorb the sulfur reaching its maximum activity around 150°C. At the same time the adsorption on the upstream adsorbent decreases, however, what slips through is already being taken up by the nickel, until the upstream adsorbent reaches a temperature, whereby no more adsorption takes place. Upon further temperature rise the said upstream adsorbent start to regenerate by desorbing the sulfur compounds back into the hydrocarbon feed, with subsequent adsorption of the sulfur on the downstream nickel adsorbent.

In case of a system based on a sulfur insensitive reformer, as discussed above, the situation is comparable. As soon as the temperature of the reforming catalyst starts to rise, the sensitivity to sulfur poisoning decreases and the upstream sulfur trap is no longer necessary. The adsorbent can then be regenerated by heating, using excess heat from the reformer.

The nickel to be used as the downstream adsorbent can be any conventional nickel adsorbent, taking into account the nature of the sulfur compounds in the feedstock. In case the sulfur compounds give rise to bulk sulfiding of the nickel, it is preferred to have as high a nickel content as possible. Due to the nature of the adsorption, bulk adsorption, the support mainly diminishes the amount sulfur that can be adsorbed. Small amounts of support may be used, to increase the available surface area, thereby improving the diffusion properties and thus the speed of adsorption. Generally it is preferred to use nickel adsorbent containing at least 50 wt% of nickel. As supports the conventional supports can be used, such as silica, silica-alumina, and the like.

In case only surface sulfiding occurs, it also is preferred to use a support, as the use thereof increases the surface area of the nickel.

The adsorbents are preferably present on the internal surface of a monolith. This is preferred in view of ease of construction, low pressure drop and replacement for regeneration.

It is to be noted that it is also possible to use other sulfur adsorbents as the downstream adsorbent instead of nickel. When these adsorbents start to take up sulfur only when they are brought to specific operating temperature, the principles of this invention apply also to them.

The hydrogen production step in the present invention can be any system for hydrogen production from hydrocarbons. Suitable systems are steam reforming, autothermal reforming, and the like. These systems may include additional process steps to increase the hydrogen content, for example by removing $CO_2$, water-gas shift of CO, and the like.

Shift converters are conventionally employed in conjunction with reforming operations. In steam reforming the hydrocarbon reacts with $H_2O$ to yield a product gas containing primarily hydrogen and carbon monoxide, plus any unreacted hydrocarbons. In order to reduce the carbon monoxide level and enhance the hydrogen yield, the effluent of the steam reforming process may be passed into a so-called shift converter, in which the effluent is contacted with a catalyst over which carbon monoxide will react with water to yield carbon dioxide and hydrogen according to the following reaction:

$$CO + H_2O \Rightarrow CO_2 + H_2$$

This water gas shift reaction is often carried out in two stages, a first high temperature stage (e.g., 425°-480°C.) in order to secure high reaction rates and a second, low temperature stage (e.g., below 250°C.) to enhance the overall yield of the reaction, based on a more favorable equilibrium hydrogen production.

For many fuel cells, such as for example, for a molten carbonate or phosphoric acid electrolyte fuel cell, the carbon dioxide content of the hydrogen-rich gas stream is acceptable. However, it will be appreciated that the hydrogen-rich effluent stream may be treated, if necessary or desired, to purify the hydrogen stream by removal or reduction of the quantity of carbon dioxide and. optionally, other contaminants, which may be contained therein. The nature and degree of purification will depend on the requirements on the hydrogen in the further processing (industrial use, electricity production using fuel cells).

The reforming process is advantageously employed to provide a hydrogen fuel for a fuel cell from a hydrocarbon feed, such as natural gas or methane.

The hydrogen produced is used for generating electricity in a fuel cell. In the invention a conventional fuel cell may be used, such as the phosphoric acid type fuel cells, solid oxide electrolyte type fuel cells, molten carbonate type fuel cells, porous polymer type fuel cells (based on proton exchange membranes, such as Nafion®-type and the like. In view of the use of the system, intermittent use for household and comparable situations, fuel cells based on proton exchange membranes (polymeric) are preferred (also called Solid Polymer Fuel Cells (SPFC)).

The invention is also directed to a fuel cell power plant comprising

- fuel cell means, the fuel cell means comprising a stack of anodes and cathodes and having an anode side and a cathode side, each side dimensioned and configured for the passage of respective gas streams therethrough,
- means for producing a hydrogen-rich gas from a hydrocarbon feed in a reformer,
- means for removing sulfur from the hydrocarbon feed at elevated temperature by adsorption of the sulfur compounds in a sulfur trap containing nickel material, and
- means for removing sulfur during start-up phase upstream from the said sulfur trap containing nickel material, comprising a separate low temperature sulfur trap upstream of the said nickel containing sulfur trap, said low temperature sulfur trap comprising an adsorbent that adsorbs sulfur compounds at low temperature, and releases adsorbed sulfur at the said elevated temperature.

In a another embodiment the invention is also directed to a system based on a high temperature sulfur insensitive reforming step, as disclosed hereinabove, which embodiments are described in the attached claims.

As mentioned above, the process of the invention is not limited to a specific type of fuel cells, but is applicable generally to any fuel cell that requires a hydrogen fuel. Molten carbonate fuel cells may also make use of the hydrogen-rich stream provided by the reforming process of the invention. Molten carbonate fuel cells operate at about 650°C. and would not require the utilization of shift reactors, because carbon monoxide entering the cell will be shift reacted at the cell operating temperature in the presence of molten carbonate. The molten carbonate fuel cells are more electrically efficient than phosphoric acid electrolyte fuel cells and, because of their significantly higher operating temperatures, produce high quality, i.e., high temperature steam as a by-product.

In view of the nature of the intended use (intermittent, high speed of start-up), it is preferred to use a fuel cell based on proton exchange membrane (PEM), as these fuel cells provide a sufficiently fast start up.

The invention is further directed to a fuel cell system, comprising a fuel cell means, the fuel cell means comprising a stack of anodes and cathodes and having an anode side and a cathode side, each side dimensioned and configured for the passage of respective gas streams therethrough, means for producing a hydrogen-rich gas from a hydrocarbon source in a hydrogen production unit, means for removing sulfur from the hydrocarbon feed at elevated temperature by adsorption of the sulfur compounds in a high temperature sulfur trap containing nickel material, and means for removing sulfur during start-up phase upstream from the said high temperature sulfur trap containing nickel material, comprising a low temperature sulfur trap comprising an adsorbent that adsorbs sulfur compounds at low temperature, and releases adsorbed sulfur at the said elevated temperature. In a preferred embodiment the adsorbents and the catalysts present herein are applied in monolithic or structured reactor elements.

The invention is now described on the basis of the attached figures

In the figures a schematic view is given of prior art processes and some variants of the processes of the invention. It is to be noted that this view is in no way complete, as it only indicates those parts of the process that are needed to understand the invention. In the figures the invention has been elucidated on the basis of the production of hydrogen for use in a fuel cell. However, it is to be understood that it is also possible to use it for other purposes as has been indicated previously.

In figure 1 a conventional process is shown.

Via line 1 a sulfur containing hydrocarbon feedstock is introduced in a conventional catalytic HDS system 2. The partly desulfurised feedstock is removed via line 3, optionally with separation of (gaseous) hydrogen sulfide via line 4. This is further treated in a conventional sulfur recovery system, such as a Claus process indicated as 5.

The partly desulfurised feedstock is subsequently further desulfurised in adsorption unit 6, which adsorption is based on the use of a nickel adsorbent. The desulfurised feedstock is introduced via line 7 in a hydrogen production and purification unit 8 (usually including a reforming step), wherein it is converted to hydrogen. Excess heat from the unit 8 is used to keep the temperature of the adsorption unit 6 at the required level. This has been indicated by the dotted line 9. During start-up external energy is used to bring the unit to the required temperature. This has been indicated by the dotted line 10.

The hydrogen produced is introduced into a fuel cell 12 via line 11. Oxygen is introduced via line 13, and the generated electricity is taken out via 14.

In this process the sulfur is completely removed prior to the reforming step.

In figure 2 a process is shown wherein a reforming step is used that is sulfur insensitive at operating temperature, such as an autothermal reforming process. As can be seen, the hydrocarbon feedstock does not undergo adsorption prior to the reforming, but the sulfur is adsorbed from the hydrogen, in unit 6, after the reforming. Usually the adsorbent is a metal oxide, such as zinc oxide. The purified hydrogen is then used in the fuel cell via line 15. It is to be noted that generally the sulfur adsorption will take place prior to some further purification, which means that unit 6 will be incorporated somewhere in unit 8.

In figure 3 a process according to the invention is shown, based on the procees set-up of figure 1.

In this figure, an additional adsorption unit 51 has been placed upstream of the adsorption unit 6. This unit 51 contains the low temperature adsorbent, such as a zeolite. After start-up, when the reforming unit 8 has reached its operating temperature and the adsorption unit 6 has reached its optimal temperature, with heat supplied via 9, the low temperature adsorption unit is heated to via 9 and brought at its desorption temperature.

In figure 4 a process according to the invention is shown, based on the process of figure 2.

In this process also the low temperature adsorption unit 51 has been included, which operates until the reforming in unit 8 has reached the temperature at which it has become sulfur insensitive.

Once this temperature has been reached the unit 51 is heated to desorption temperature via 9.

While the invention has been described in detail with respect to specific preferred embodiments thereof, it will be appreciated that those skilled in the art, upon a reading and understanding of the foregoing will readily envision modifications and variations to the preferred embodiments which are nonetheless within the spirit and scope of the invention and of the claims.

### Example 1:

A helium flow containing 2.5 ppm THT (Tetrahydrothiophene) was fed to a gas chromatographic analysis device equipped to detect low concentrations of THT. After 25 minutes the flow was switched to a reactor containing a sieve fraction of 0.25-0.60 mm of adsorbent comprising Zeolite X. Relative to the amount of sorbent, the gasflow had a gas hourly space velocity of 6000 hr-1, whereas the adsorbent temperature was maintained at 25°C. After a period of 100 min the reactor was again bypassed. The observed THT concentration is reported in Table 1.

TABLE 1

| Time (min) | Experiment | THT concentration (ppm) |
|------------|----------------------------|-------------------------|
| 0-25 | Reactor bypassed | 2.5 |
| 25-100 | Adsorption reactor in-line | 0 |
| 100-125 | Reactor bypassed | 2.5 |

### Example 2

A helium flow containing 955 ppm THT (Tetrahydrothiophene) was fed to a reactor containing a sieve fraction of 0.25-0.60 mm of adsorbent comprising Zeolite X (Si/Al ration of ..mol/mol). Relative to the amount of sorbent, the gasflow had a gas hourly space velocity of 3000 hr-1, whereas the adsorbent temperature was maintained at 25°C. A gas chromatographic analysis device equipped to detect low concentrations of THT was installed downstream the reactor.
During this experiment no THT was detected at the outlet of the reactor. The experiment was discontinued when the theoretic THT loading of the adsorbent was 2 wt.%

### Example 3:

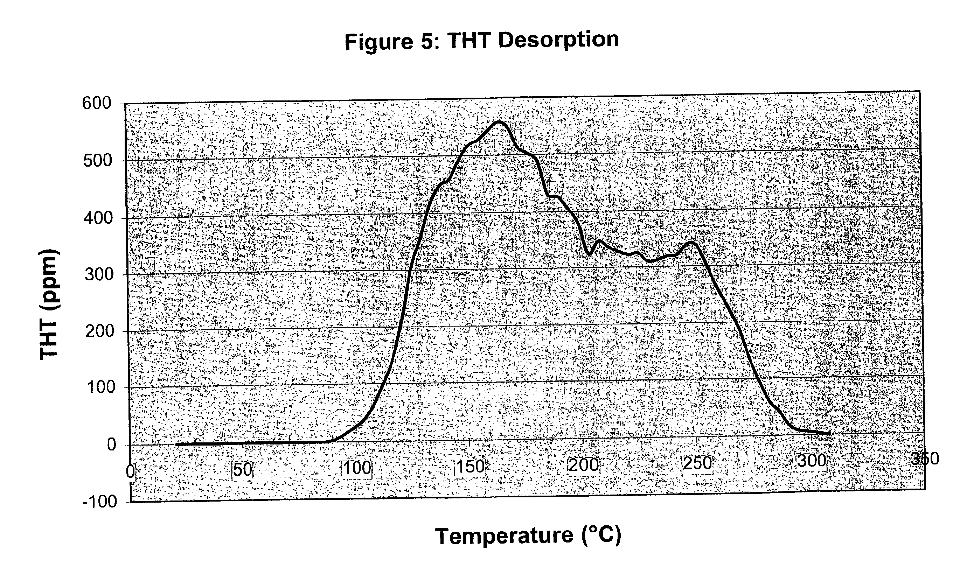

Material onto which THT was adsorbed according to Example 2 was exposed to a temperature programmed desorption experiment. For this purpose, a flow of helium was fed to the reactor. Relative to the amount of sorbent, the gasflow had a gas hourly space velocity of 3000 hr-1. The temperature was increased from 25 to 250°C with a heating rate of 1°C/min.
During this experiment no THT desorption was detected at temperatures below 80°C. The desorption curve is given in the attached figure 5.

### Example 4:

A helium flow containing 955 ppm THT (Tetrahydrothiophene) was fed to a reactor containing a sieve fraction of 0.25-0.60 mm of an alumina supported activated nickel adsorbent. This adsorbent had a nickel loading of 60 wt.%, a surface area and pore volume as determined with nitrogen physisorption of 170 $m^2$/g and 0.5 ml/ g. Relative to the amount of sorbent, the gasflow had a gas hourly space velocity of 6000 hr-1. The temperature was increased from 25 to 200°C with a heating rate of 2°C/min. A gas chromatographic analysis device equipped to detect low concentrations of THT as well as other organic compounds not containing sulfur, was installed downstream of the reactor. During this experiment no THT was detected downstream of the nickel adsorbent, however, other organic compounds not containing sulfur, being decomposition products of THT, were detected in the whole temperature range.

*Example 5:*

A helium flow containing 955 ppm THT (Tetrahydrothiophene) was fed to a reactor containing a sieve fraction of 0.25-0.60 mm of adsorbent comprising Zeolite X, with downstream thereof a sieve fraction of 0.25-0.60 mm of an alumina supported activated nickel adsorbent, as described in example 4. Relative to the first adsorbent the gas hourly space velocity was 6000 hr-1, whereas this was 2000 hr-1 relative to the nickel adsorbent. The temperature was increased from 75 to 250°C with a heating rate of 2°C/min. A gas chromatographic analysis device equipped to detect low concentrations of THT as well as other organic compounds not containing sulfur, was installed downstream the reactor.

During this experiment no THT was detected downstream the nickel adsorbent, however, at temperatures higher than 130°C, other organic compounds not containing sulfur, being decomposition products of THT, were detected.

**Claims**

1. Process for removal of sulfur compounds from a hydrocarbon source containing them, wherein the hydrocarbon source is to be utilized in a downstream hydrogen production process including a sulfur removal step, said process for removal of sulfur compounds comprising passing the said hydrocarbon source through a low temperature sulfur trap, wherein the low temperature sulfur trap comprises an adsorbent that adsorbs sulfur compounds at low temperature, and releases adsorbed sulfur at elevated temperature.

2. Process for removal of sulfur compounds from a hydrocarbon source containing them according to claim 1, said process for removal of sulfur compounds comprising passing the said hydrocarbon source through a low temperature sulfur trap, and a nickel containing high temperature sulfur trap, wherein the low temperature sulfur trap comprises an adsorbent that adsorbs sulfur compounds at low temperature, and releases adsorbed sulfur at elevated temperature, said elevated temperature being above that at which nickel starts to adsorb sulfur compounds.

3. Process according to claim 1 or 2, wherein the adsorption in the low temperature sulfur trap occurs at a temperature below 75°C.

4. Process according to claim 2, wherein adsorption in the nickel occurs at a temperature above 65°C.

5. Process according to claims 1-4, wherein the desorption of sulfur compounds from the adsorbent in the low temperature sulfur trap occurs at temperatures above 80°C.

6. Process according to claims 1-5, wherein the said adsorbent in the said low temperature sulfur trap is selected from the group zeolites, carbon, clay materials, alumina, and silica-alumina.

7. Process for the production of hydrogen from a hydrocarbon source containing sulfur compounds, said process comprising removal the said sulfur compounds from the said hydrocarbon source by passing the said hydrocarbon source consecutively through a low temperature sulfur trap, and a nickel containing high temperature sulfur trap, and converting the substantially sulfur free hydrocarbon source to hydrogen, wherein the low temperature sulfur trap comprises an adsorbent that adsorbs sulfur compounds at low temperature, and releases adsorbed sulfur at elevated temperature, said elevated temperature being above that at which nickel starts to adsorb sulfur compounds.

8. Process according to claim 7, wherein the said step of converting the hydrocarbon source to hydrogen is a steam reforming, or autothermal reforming.

9. Process for the production of hydrogen from a hydrocarbon source containing sulfur compounds, said process comprising removing during start-up the said sulfur compounds from the said hydrocarbon source by passing the said hydrocarbon source through a low temperature sulfur trap, and converting the hydrocarbon source to hydrogen in a high temperature sulfur resistant reforming step, wherein the low temperature sulfur trap comprises an adsorbent that adsorbs sulfur compounds at low temperature, and releases adsorbed sulfur at elevated temperature, said low temperature sulfur trap being heated when the reforming unit is at its operating temperature.

10. Process for generating electricity from fuel cell means, the fuel cell means comprising a stack of anodes and cathodes and having an anode side and a cathode side, each side dimensioned and configured for the passage of respective gas streams therethrough, the fuel cell means being fueled by a hydrogen-rich gas derived by converting a hydrocarbon source in a reformer, the improvement comprising passing the said hydrocarbon source consecutively through a low temperature sulfur trap, and a nickel containing high temperature sulfur trap, wherein the low temperature sulfur trap comprises an adsorbent that adsorbs sulfur compounds at low temperature, and releases adsorbed sulfur at elevated temperature, said elevated temperature being above that at which nickel starts to adsorb sulfur compounds.

11. Process for generating electricity from fuel cell means, the fuel cell means comprising a stack of anodes and cathodes and having an anode side and a cathode side, each side dimensioned and configured for the passage of respective gas streams therethrough, the fuel cell means being fueled by a hydrogen-rich gas derived by converting a hydrocarbon source in a high temperature sulfur resistant reformer, removing sulfur from the hydrogen-rich gas at elevated temperature by adsorption of the sulfur compounds in a sulfur trap, the improvement comprising passing the said hydrocarbon source through a low temperature sulfur trap, comprising an adsorbent that adsorbs sulfur compounds at low temperature, and releases adsorbed sulfur at elevated temperature.

12. Process according to claim 10 or 11, wherein the adsorption in the low temperature sulfur trap occurs at a temperature below 75°C.

13. Process according to claim 10, wherein adsorption in the nickel occurs at a temperature above 65°C.

14. Process according to claims 10-13, wherein the desorption of sulfur compounds from the adsorbens in the low temperature sulfur trap occurs at temperatures above 80°C.

15. Process according to claims 10-14, wherein the said adsorbent in the said low temperature sulfur trap is selected from the group zeolites, carbon, clay materials, alumina, and silica-alumina.

16. Process according to claims 10, wherein the said nickel adsorbent and the said low temperature adsorbent are gradually heated during start-up of the hydrogen production unit and the fuel cell means.

17. Process according to claims 10-16, wherein the said step of converting the hydrocarbon source to hydrogen is a reforming step.

18. Process of claims 10-17, wherein said hydrocarbon source is a hydrocarbon source that contains sulfur compounds, more in particular a normally liquid hydrocarbon or natural gas.

19. Process according to claims 10-18, wherein the sulfur present in the sulfur compounds is substantially not part of aromatic ring.

20. Use of an adsorbent that adsorbs sulfur compounds at low temperature, and releases adsorbed sulfur at the said elevated temperature, during the start-up phase of a fuel cell or a hydrogen production unit, for removal of sulfur from hydrocarbon feed.

21. Sulfur removal unit comprising at least one a low temperature sulfur trap, and at least one nickel containing high temperature sulfur trap, wherein the low temperature sulfur trap comprises an adsorbent that adsorbs sulfur compounds at low temperature, and releases adsorbed sulfur at elevated temperature.

22. Fuel cell system comprising

   - fuel cell means, the fuel cell means comprising a stack of anodes and cathodes and having an anode side and a cathode side, each side dimensioned and configured for the passage of respective gas streams therethrough,
   - means for producing a hydrogen-rich gas from a hydrocarbon source in a hydrogen production unit,
   - means for removing sulfur from the hydrocarbon feed at elevated temperature by adsorption of the sulfur compounds in a high temperature sulfur trap containing nickel material, and
   - means for removing sulfur during start-up phase upstream from the said high temperature sulfur trap containing nickel material, comprising a low temperature sulfur trap comprising an adsorbent that adsorbs sulfur compounds at low temperature, and releases adsorbed sulfur at the said elevated temperature.

**23.** Fuel cell system comprising a fuel cell means, the fuel cell means comprising a stack of anodes and cathodes and having an anode side and a cathode side, each side dimensioned and configured for the passage of respective gas streams therethrough, means for producing a hydrogen-rich gas from a hydrocarbon source in a sulfur resistant reforming unit, first means for removing sulfur from the hydrogen rich gas by adsorption of the sulfur compounds, and second means for removing sulfur during start-up phase upstream from the said means for producing a hydrogen-rich gas, for removing sulfur from the hydrogen rich, said second means comprising a low temperature sulfur trap comprising an adsorbent that adsorbs sulfur compounds at low temperature, and releases adsorbed sulfur at the said elevated temperature.

EP 1 236 495 A1

Fig. 1

Fig. 2

Fig. 3

Fig. 4

# Figure 5: THT Desorption

EP 1 236 495 A1

European Patent Office

## EUROPEAN SEARCH REPORT

Application Number

EP 01 20 0799

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 882 614 A (TAYLOR, JR. ET AL) 16 March 1999 (1999-03-16) * column 2, line 10 - column 2, line 59 * | 1-9,20, 21 | B01D53/04 C01B3/38 H01M8/06 C10G25/05 C10G25/00 |
| X | US 6 159 256 A (BONVILLE, JR. ET AL) 12 December 2000 (2000-12-12) * column 2, line 45 - column 3, line 12 * * column 4, line 20 - column 5, line 51 * | 10-17, 22,23 | |
| X | EP 0 565 025 A (NIPPON OIL CO. LTD.) 13 October 1993 (1993-10-13) | 20 | |
| A | * column 4, line 3 - column 7, line 37 * | 1,7, 9-11, 21-23 | |

TECHNICAL FIELDS SEARCHED (Int.Cl.7)

B01D
C01B
H01M
C10G
C10L

The present search report has been drawn up for all claims

| Place of search | Date of completion of the search | Examiner |
|---|---|---|
| THE HAGUE | 23 July 2001 | Doolan, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 01 20 0799

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-2001

| Patent document cited in search report | | Publication date | Patent family member(s) | | Publication date |
|---|---|---|---|---|---|
| US 5882614 | A | 16-03-1999 | AU | 2458199 A | 09-08-1999 |
| | | | BR | 9907201 A | 10-10-2000 |
| | | | EP | 1049757 A | 08-11-2000 |
| | | | NO | 20003681 A | 20-09-2000 |
| | | | WO | 9937740 A | 29-07-1999 |
| | | | US | 6103206 A | 15-08-2000 |
| US 6159256 | A | 12-12-2000 | US | 6156084 A | 05-12-2000 |
| | | | AU | 4960899 A | 10-01-2000 |
| | | | WO | 9967018 A | 29-12-1999 |
| EP 565025 | A | 13-10-1993 | DE | 69312546 D | 04-09-1997 |
| | | | DE | 69312546 T | 19-03-1998 |
| | | | JP | 6315628 A | 15-11-1994 |
| | | | US | 5800798 A | 01-09-1998 |

EPO FORM P0459

For more details about this annex : see Official Journal of the European Patent Office, No. 12/82